# FASCICULE DE BREVET EUROPEEN

(11) **EP 1 104 117 B1**
(45) Date de publication et mention de la délivrance du brevet: **06.10.2010**
(21) Numéro de dépôt: 00403195.1
(22) Date de dépôt: 16.11.2000
(51) Int. Cl.: H04B 5/00

(54) **Installation de radiocommunication ayant des câbles à pertes en tant qu'élements rayonnants**
Radiokommunikationsanlage mit Verlustkabeln als Strahlungselementen
Radiocommunication installation having lossy cables as radiating elements

(30) Priorité: 26.11.1999 FR 9914904
(43) Date de publication de la demande: 30.05.2001
(73) Titulaire: EADS Secure Networks, 78990 Elancourt (FR)
(72) Inventeur: Ferlay, Jean-Pierre, 91080 Courcouronnes (FR)
(74) Mandataire: Verdure, Stéphane

(56) Documents cités:
- WO-A-97/16892
- US-A- 3 629 707

## Description

La présente invention concerne le domaine de la radiocommunication cellulaire, et plus particulièrement les aspects liés au fonctionnement des réseaux cellulaires dans des environnements clos ou souterrains, tels que des tunnels.

Dans un système de radiocommunication cellulaire, chaque cellule est desservie par une station de base. A sa mise en tension, une station mobile sélectionne la station de base avec laquelle la liaison radio est la meilleure. Lorsque la station mobile se déplace en changeant de cellule, elle peut resélectionner une autre station de base. Cette sélection/resélection est effectuée à l'aide d'un signal de balise que chaque station de base diffuse sur une fréquence particulière.

Dans de nombreux systèmes, le changement de cellule peut également avoir lieu en cours de communication, par le processus appelé « handover ». La station de base assurant la liaison radio avec la station mobile lui communique des données identifiant les canaux sur lesquels les stations de base des cellules voisines émettent leurs signaux de balise. Cette indication peut consister en une liste de fréquences portant respectivement les signaux de balise des cellules voisines. Parallèlement à la communication, la station mobile surveille ces fréquences. Une comparaison entre les conditions de réception dans la cellule de desserte et dans les cellules voisines permet de décider à quel moment le changement de cellule doit être effectué. Selon les systèmes, cette décision est prise soit au niveau des stations mobiles, soit au niveau de l'infrastructure fixe.

Dans des environnements confinés, où les ondes radioélectriques se propagent mal, la continuité des services de radiocommunication cellulaire est parfois assurée au moyen de câbles rayonnants installés le long des zones où le service doit être assuré. Ces câbles sont généralement de type coaxial, avec un blindage extérieur imparfait de façon que les pertes de rayonnement assurent la couverture radio dans la zone concernée. Ils sont notamment utilisés dans des tunnels ferroviaires. Dans l'exemple du métro, les stations de base du système cellulaire sont placées dans des gares, typiquement distantes de 500 à 1500 mètres, et reliées à des tronçons de câbles à pertes s'étendant le long des tunnels séparant les gares.

L'utilisation des câbles à pertes pose un problème pour les procédures de handover, étant donné que le champ diffusé par un tel câble s'évanouit brutalement aux extrémités du câble. Les tronçons de câble successifs sont habituellement mis bout à bout, de telle sorte qu'il n'existe qu'un très faible recouvrement des cellules aux frontières. Dans ces conditions, la station mobile n'a pas le temps d'effectuer les mesures requises sur le signal de balise de la cellule voisine afin de pouvoir exécuter le handover, d'autant moins que la vitesse de déplacement du mobile est généralement assez élevée (dans le cas du métro, la frontière entre deux cellules se trouve typiquement au milieu d'un tunnel séparant deux gares, c'est-à-dire à un endroit où les rames circulent à pleine vitesse). Il risque donc de se produire une coupure de communication due au fait que la station mobile n'a pas pu effectuer les mesures requises avant d'entrer dans la nouvelle cellule.

Pour remédier à ce problème, le document W097/16 892 propose de faire en sorte que les tronçons de câble successifs relatifs à deux cellules voisines se chevauchent sur une certaine longueur à la frontière de ces cellules, l'un des deux tronçons étant pourvu d'un atténuateur placé de façon à atténuer le rayonnement de l'un des deux câbles dans la zone de chevauchement. Cette atténuation est telle que la station mobile puisse continuer à communiquer avec la station de base alimentant le câble pourvu de l'atténuateur lorsqu'il se dirige vers l'autre cellule, tout en effectuant les mesures nécessaires à l'exécution du handover sur le signal de balise émis sans atténuation depuis l'autre cellule. Cette méthode a pour inconvénient que le niveau des signaux, déjà faible aux extrémités des tronçons de câble avant atténuation, devient pratiquement inutilisable une fois atténué, à moins que le chevauchement entre les tronçons soit relativement important. Mais le coût de l'installation est élevé si le chevauchement est important, compte tenu du prix des câbles à pertes. De plus, la méthode est unidirectionnelle : dans le cas d'un tunnel dans lequel les trains circulent dans les deux sens, les handovers ne sont rendus possibles que dans un seul sens. En outre, l'installation nécessite des interventions au milieu des tunnels si le réseau ferroviaire est équipé de câbles à pertes préexistants, ce qui complique sa mise en place.

Un autre inconvénient de cette solution est que l'atténuation s'applique à tous les signaux portés par les câbles. Or ces câbles supportent souvent plusieurs services de radiocommunication, fournis selon des systèmes cellulaires différents et/ou gérés par des opérateurs différents. La méthode ne convient pas lorsque seulement un opérateur souhaite l'appliquer.

Un but de la présente invention est de remédier aux inconvénients ci-dessus afin de faciliter le handover entre deux cellules voisines dans un environnement clos ou souterrain tel qu'un tunnel.

Selon l'invention, il est proposé une installation de radiocommunication, comprenant des tronçons de câble à pertes disposés en succession le long d'une zone de couverture radio, et des moyens d'alimentation des tronçons de câble depuis des stations de base d'au moins un réseau de radiocommunication cellulaire. Les moyens d'alimentation comprennent des moyens pour fournir des premiers signaux radiofréquence issus d'une première station de base d'un réseau cellulaire à un premier tronçon de câble, des moyens pour fournir des seconds signaux radiofréquence issus d'une seconde station de base dudit réseau cellulaire à un second tronçon de câble, adjacent au premier tronçon, et des moyens pour fournir au moins une partie des seconds signaux radiofréquence au premier tronçon de câble.

Le recouvrement entre cellules voisines est assuré au moyen des signaux injectés dans les tronçons de câble successifs. Ceci procure une grande flexibilité dans la mise en place des moyens servant à effectuer le handover dans de bonnes conditions. En particulier, il n'est pas nécessaire d'intervenir à l'intérieur du tunnel, et l'application de la solution ne s'impose pas nécessairement à tous les signaux transportés par les câbles. Cette solution n'impose pas non plus que les câbles se chevauchent sur des longueurs significatives, ce qui est intéressant en termes de coût.

Pour favoriser la sélection de la meilleure cellule, ladite partie des seconds signaux radiofréquence est de préférence fournie au premier tronçon de câble avec une atténuation par rapport aux premiers signaux radiofréquence tels que fournis au premier tronçon de câble.

Dans une réalisation typique, le chevauchement des cellules est effectué de façon symétrique, c'est-à-dire que les moyens d'alimentation comprennent également des moyens pour fournir au moins une partie des premiers signaux radiofréquence au second tronçon de câble, de préférence avec une atténuation par rapport aux seconds signaux radiofréquence tels que fournis au second tronçon de câble.

Selon les applications, les signaux radiofréquence (RF) d'une cellule, fournis au tronçon de câble le plus proche de la cellule voisine peuvent comprendre la totalité des signaux émis par cette cellule, ou une partie seulement, à savoir la fréquence portant le signal de balise de la cellule voisine.

L'installation comprendra généralement des moyens de collecte des signaux radio captés par les tronçons de câble à pertes. Dans une réalisation avantageuse, ces moyens de collecte comprennent des moyens pour fournir des troisièmes signaux radiofréquence issus du premier tronçon de câble à la première station de base, et des moyens pour fournir au moins une partie desdits troisièmes signaux radiofréquence à la seconde station de base.

D'autres particularités et avantages de la présente invention apparaîtront dans la description ci-après d'exemples de réalisation non limitatifs, en référence aux dessins annexés, dans lesquels:
- la figure 1 est un schéma synoptique d'une installation selon l'invention ;
- les figures 2 et 3 sont des schémas de dispositifs de couplage et d'amplification de l'installation de la figure 1; et
- la figure 4 est un schéma d'un dispositif de couplage utilisable dans une variante de l'installation.

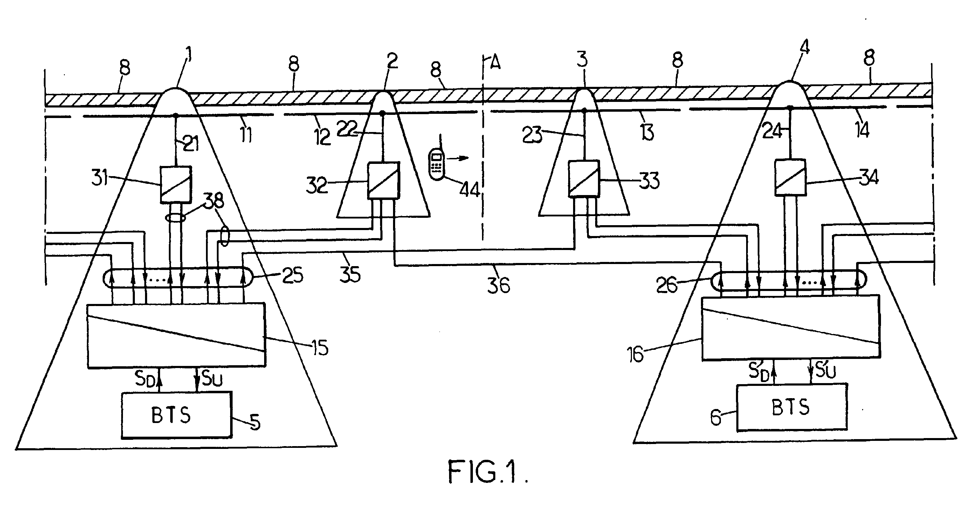

La figure 1 illustre schématiquement le déploiement d'un réseau cellulaire de radiocommunication le long d'une ligne de métro comprenant des gares 1-4 séparées par des tunnels 8.

Des stations de base (BTS) du réseau cellulaire sont disposées dans certaines des gares 1, 4. Les antennes de ces stations de base 5, 6 sont constituées par des tronçons de câble à pertes 11-14 disposés les uns à la suite des autres le long de la ligne de métro, afin d'offrir une couverture radio à l'intérieur des tunnels 8. Ils sont par exemple suspendus à la voûte des tunnels 8. Chaque BTS 5, 6 peut être associée à plusieurs tronçons de câble à pertes, respectivement 11-12 et 13-14. La cellule desservie par cette BTS 5,6 correspond à la zone de couverture radio des différents tronçons de câble qui lui sont associés. Dans l'illustration de la figure 1, la ligne A schématise la frontière entre les cellules respectivement desservies par les BTS 5 et 6.

L'étage radio de chaque BTS 5, 6 est relié à un coupleur-multiplexeur RF/FO 15, 16 qui sert d'interface avec un faisceau 25, 26 de fibres optiques (FO). Pour le sens descendant (« downlink »), ce coupleur-multiplexeur RF/FO 15, 16 reçoit le signal radiofréquence S_{D}, S' _{D} délivré par la BTS 5, 6, le traduit sous forme de modulation lumineuse, et le diffuse N fois sur des fibres optiques du faisceau 25, 26, N désignant le nombre de tronçons de câble à pertes associés aux BTS 5, 6.

Chaque tronçon de câble 11-14 est alimenté par un câble coaxial respectif 21-24 relié à un dispositif de couplage et d'amplification 31-34. Dans un agencement typique, chacun des dispositifs 31-34, le câble d'alimentation correspondant 21-24 et le point d'injection (raccordement du câble d'alimentation 21-24 au tronçon de câble à pertes 11-14) se trouvent dans une gare du métro 1-4.

Pour le sens montant (« uplink »), le dispositif 31-34 traduit le signal RF collecté par le tronçon de câble 11-14 sous forme d'une modulation lumineuse transmise sur une fibre optique jusqu'au coupleur-multiplexeur 15,16 concerné. Celui-ci combine les signaux uplink issus des différents tronçons de câble à pertes associés à sa BTS 5, 6 pour former le signal radiofréquence S_{U}, S' _{U} adressé à celle-ci.

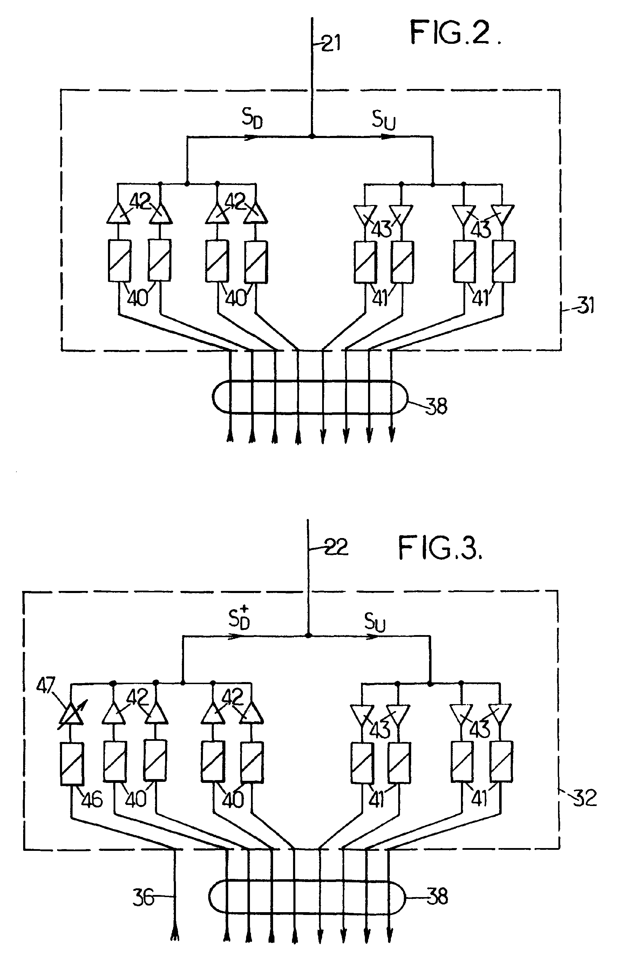

La figure 2 illustre de façon plus détaillée la structure du dispositif 31 de la figure 1, dans un cas particulier où les signaux radio S_{D}, S_{U} émis et reçus par les BTS sont des signaux à multiplexage fréquentiel (FDMA, « Frequency Division Multiple Access »). Dans l'exemple représenté, quatre fréquences sont utilisables dans chaque sens par la BTS, à savoir trois fréquences pour supporter des canaux de trafic et une fréquence pour supporter un canal de contrôle. A chaque canal de trafic ou de contrôle descendant correspond, sur une autre fréquence, un canal de trafic ou de contrôle montant. Le canal de contrôle descendant porte notamment un signal de balise propre à la cellule desservie, permettant aux stations mobiles de sélectionner la station de base et d'effectuer les mesures requises pour le handover. Dans l'exemple considéré, une fibre optique est dédiée à la transmission d'une fréquence particulière, de sorte que la portion 38 du faisceau de fibres optiques 25 reliant le dispositif 31 au coupleur-multiplexeur 15 de la cellule se compose de huit fibres.

Pour chaque fibre, un coupleur FO/RF élémentaire 40, 41 assure la traduction entre la modulation radioélectrique du côté du câble coaxial 21 et la modulation lumineuse du côté de la fibre. Des amplificateurs RF 42, 43 sont placés en aval des coupleurs élémentaires 40 dans le sens descendant et en amont des coupleurs élémentaires 41 dans le sens montant, pour assurer les niveaux adéquats des signaux. Les signaux de sortie des amplificateurs 42 sont combinés pour reformer le signal radiofréquence S_{D} envoyé au câble à pertes 11 par l'intermédiaire du câble d'alimentation 21. Le signal montant S_{U} capté par le tronçon de câble à pertes 11 est distribué aux entrées des amplificateurs 43 depuis le câble 21.

Ce système de distribution des signaux définit la cellule comme la juxtaposition des zones allongées couvertes par les tronçons de câbles successifs 11-12 ainsi reliés à la BTS 5. Un système de distribution semblable peut être prévu dans chaque cellule le long de la ligne de métro. Le nombre de tronçons de câbles à pertes peut varier d'une cellule à une autre. Lorsqu'il y a un seul tronçon de câble pour une cellule les fibres optiques et les coupleurs ne sont pas nécessaires, la sortie RF de la BTS pouvant attaquer directement le tronçon de câble.

On notera que d'autres agencements sont possibles pour distribuer les signaux entre les BTS et les tronçons de câble. En particulier, certaines fibres optiques pourraient, de façon connue en soi, transporter plusieurs fréquences ou alimenter en série plusieurs dispositifs de couplage et d'amplification dans le sens descendant.

Dans l'exemple de la figure 1, le tronçon de câble 12 se trouve dans la zone de la cellule desservie par la BTS 5 qui est la plus proche de la cellule desservie par la BTS 6, et le tronçon de câble à pertes 13 se trouve dans la zone de la cellule desservie par la BTS 6 qui est la plus proche de la cellule desservie par la BTS 5.

Des dispositions sont prises pour que le signal de balise issu de la BTS 6 soit en outre diffusé par le tronçon de câble 12, et pour que le signal de balise issu de la BTS 5 soit en outre diffusé par le tronçon de câble 13, ces signaux de balise étant alors diffusés avec une atténuation par rapport aux autres signaux. Ceci permet à une station mobile 44 desservie par la BTS 5 et se trouvant à portée du tronçon de câble 12 alors qu'elle se dirige en direction de la cellule voisine, de capter le signal de balise de cette dernière afin de se préparer au handover.

Pour réaliser ce chevauchement partiel entre cellules, une fibre optique 36 du faisceau 26, portant le signal de balise de la BTS 6, est reliée au dispositif de couplage et d'amplification 32 situé dans la gare 2. Symétriquement, une fibre optique 35 du faisceau 25, portant le signal de balise de la BTS 5, est reliée au dispositif 33 situé dans la gare 3.

Le dispositif 32 est schématisé sur la figure 3. Il a une structure dans une large mesure identique à celle du dispositif 31 de la figure 2, des références numériques identiques ayant été employées pour désigner les éléments correspondants. Dans le sens descendant, un coupleur élémentaire supplémentaire 46 traduit sous forme radioélectrique la modulation lumineuse du signal transmis sur la fibre optique 36 issue du coupleur-multiplexeur 26 de la cellule voisine. En sortie de ce coupleur élémentaire 46, un amplificateur RF 47 amplifie la fréquence du canal de contrôle, qui est combinée au signal descendant S_{D} relatif à la BTS 5 pour former le signal S_{D} ⁺ émis par le tronçon de câble à pertes 12.

L'amplificateur 47 est réglé avec un gain plus faible que les amplificateurs 42 des autres fréquences, afin que le signal de balise de la cellule voisine soit émis avec une puissance plus faible que les signaux radio issus de la BTS 5. Ceci assure que les stations mobiles sélectionnent la bonne BTS dans les zones frontières.

Dans l'exemple considéré précédemment, ou le système cellulaire est de type FDMA, la diffusion de la seule fréquence portant le signal de balise de la cellule voisine dans la zone d'extrémité de la cellule donnée suffit pour réaliser le chevauchement de cellules servant à faciliter le handover. Dans d'autres types de système de radiocommunication cellulaire, il peut être nécessaire de diffuser dans cette zone une portion plus grande, voire la totalité, du signal formé par la station de base de la cellule voisine.

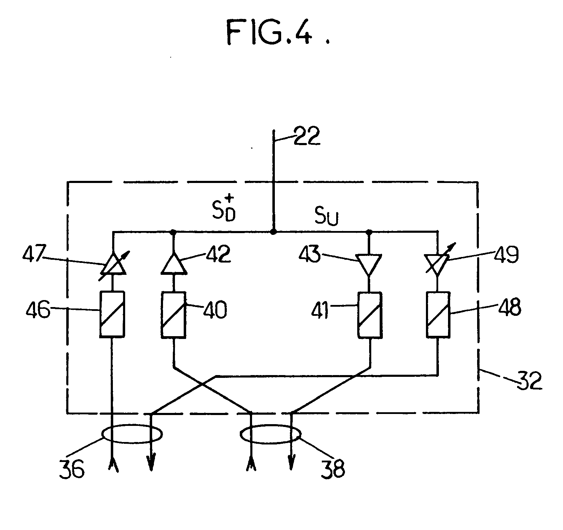

Dans la variante du dispositif de couplage et d'amplification 32 illustrée par la figure 4, les fibres optiques 38 reliées au coupleur-multiplexeur 15 de la cellule de desserte sont capables de transporter, dans un sens ou dans l'autre, toutes les fréquences employées par la BTS 5, les coupleurs 40, 41 et les amplificateurs 42, 43 ayant une largeur de bande suffisante. De même, la fibre downlink 36 est capable de transporter toutes les fréquences employées par la BTS 6 de la cellule voisine, de sorte que le dispositif 32 est agencé pour diffuser, dans la couverture du tronçon de câble 12, la totalité des signaux radio issus de la BTS 6, avec une atténuation réglée par le gain de l'amplificateur 47. En outre, le signal uplink S_{U}, capté par le tronçon 12 et le câble d'alimentation 22, est adressé à un amplificateur RF supplémentaire 49 dont la sortie est reliée à un coupleur RF/FO supplémentaire 48. En sortie du coupleur 48, le signal uplink amplifié est transporté jusqu'au coupleur-multiplexeur 16 de la cellule voisine par l'intermédiaire d'une autre fibre optique 36.

Le mode de réalisation de la figure 4 permet à la station mobile de s'adresser à la BTS de la cellule voisine avant que le handover soit terminé, ce qui est utile dans certains systèmes pour transmettre de la signalisation. Cela peut également être utilisé dans les systèmes cellulaires ayant un mode de macrodiversité, c'est-à-dire dans lesquels une station mobile peut, près des frontières de cellules, communiquer simultanément avec plusieurs BTS.

Diverses modifications peuvent être apportées aux modes de réalisation décrits ci-dessus sans sortir du cadre de la présente invention. Ainsi, le recours à un système de multiplexage et de distribution à fibres optiques dépend plus de l'architecture d'un réseau cellulaire particulier que des exigences de l'invention, laquelle peut s'appliquer également dans le cas où l'antenne de chaque BTS consiste en un seul tronçon de câble à pertes. De façon générale, l'invention trouve application chaque fois que le réseau cellulaire comporte des cellules adjacentes ayant des câbles à pertes en tant qu'éléments rayonnants.

Si les câbles à pertes sont utilisés pour d'autres services de transmission radio, les signaux RF correspondant sont mélangés au niveau des câbles d'alimentation 21-24, en sortie des dispositifs 31-34. Ceci procure un avantage de flexibilité puisque le chevauchement de cellules proposé n'est établi que pour le ou les services qui le requièrent.

## Revendications

1. Installation de radiocommunication, comprenant des tronçons de câble à pertes (11-14) disposés en succession le long d'une zone de couverture radio, et des moyens (15, 16, 21-26, 31-36) d'alimentation des tronçons de câble depuis des stations de base (5-6) d'au moins un réseau de radiocommunication cellulaire, les moyens d'alimentation comprenant des moyens (15, 25, 32) pour fournir des premiers signaux radiofréquence (S_{D}) issus d'une première station de base (5) d'un réseau cellulaire à un premier tronçon de câble (12), et des moyens (16, 26, 33) pour fournir des seconds signaux radiofréquence (S'_{D}) issus d'une seconde station de base (6) dudit réseau cellulaire à un second tronçon de câble (13), adjacent au premier tronçon, **caractérisée en ce que** les moyens d'alimentation comprennent en outre des moyens (36, 46, 47) pour fournir au moins une partie des seconds signaux radiofréquence au premier tronçon de câble (12).

2. Installation selon la revendication 1, dans laquelle ladite partie des seconds signaux radiofréquence est fournie au premier tronçon de câble (12) avec une atténuation par rapport aux premiers signaux radiofréquence tels que fournis au premier tronçon de câble.

3. Installation selon la revendication 1 ou 2, dans laquelle les moyens d'alimentation comprennent en outre des moyens (35) pour fournir au moins une partie des premiers signaux radiofréquence (S_{D}) au second tronçon de câble (13), avec une atténuation par rapport aux seconds signaux radiofréquence (S'_{D}) tels que fournis au second tronçon de câble.

4. Installation selon l'une quelconque des revendications 1 à 3, dans laquelle les seconds signaux radiofréquence (S'_{D}) sont tous fournis au premier tronçon de câble (12).

5. Installation selon l'une quelconque des revendications 1 à 3, dans laquelle ladite partie des seconds signaux radiofréquence (S'_{D}) fournie au premier tronçon de câble (12) est limitée à une fréquence portant un signal de balise de la seconde station de base (6).

6. Installation selon l'une quelconque des revendications précédentes, dans laquelle les moyens d'alimentation (15, 25, 31, 32) sont agencés pour fournir les signaux radiofréquence (S_{D}) issus de l'une au moins des première et seconde stations de base (5) à plusieurs tronçons de câble adjacents (11, 12).

7. Installation selon l'une quelconque des revendications précédentes, comprenant des moyens de collecte de signaux radio captés par les tronçons de câble à pertes (11-14), dans laquelle les moyens de collecte comprennent des moyens (41, 43) pour fournir des troisièmes signaux radiofréquence (S_{U}) issus du premier tronçon de câble (12) à la première station de base (5), et des moyens (48, 49) pour fournir au moins une partie desdits troisièmes signaux radiofréquence (S_{U}) à la seconde station de base (6).

8. Installation selon l'une quelconque des revendications précédentes, dans laquelle lesdits tronçons de câble à pertes (11-14) s'étendent dans des tunnels (6) et les moyens d'alimentation sont placés en dehors des tunnels.

## Claims

1. Mobile communication system, comprising runs of loss cable (11, 14) disposed in succession along a zone of radio coverage and feeder means (15, 16, 21-36, 31-36) for feeding the cable runs from base stations (5-6) of at least one cellular mobile communication network, wherein the feeder means have means (15, 25, 32) for applying first radio frequency signals (S_{D)} from a first base station (5) of the cellular mobile communication network to a first cable run (12), and means (16, 26, 33) for applying second radio frequency signals (S'_{D}) from a second base station (5) of the cellular mobile communication network to a second cable run (13) which is adjacent to the first run, and wherein the feeder means further have means (36, 46, 47) for applying at least part of the second radio frequency signals to the first cable run (12).

2. System as claimed in claim 1, wherein said part of the second radio frequency signals is applied to the first cable run (12) with a given attenuation relative to the first radio frequency signals as applied to the first cable run.

3. System as claimed in claim 1 or 2, wherein the feeder means further have means (35) for applying at least part of the first radio frequency signals (S_{D)} to the second cable run (13) with a given attenuation relative to the second radio frequency signals (S'_{D}) as applied to the second cable run.

4. System as claimed in anyone of claims 1 to 3, wherein all the second radio frequency signals (S'_{D}) are applied to the first cable run (12).

5. System as claimed in anyone of claims 1 to 3, wherein the part of the second radio frequency signals (S'_{D}) applied to the first cable run (12) is limited to a frequency carrying a beacon signal from the second base station (6).

6. System as claimed in anyone of the preceding claims, wherein the feeder means (15, 25, 31, 32) are set up to apply the radio frequency signals (S_{D)} from at least one of the first and second base stations (5) to several adjacent cable runs (11, 12).

7. System as claimed in anyone of the preceding claims, further having collection means to collect radio signals picked up by the runs of loss cable (11, 14), wherein the collection means have means (41, 43) for applying third radio frequency signals (S_{U)} from the first cable run (12) to the first base station (5) and means (48, 49)for applying at least part of the third radio frequency signals (S_{U)} to the second base station (6).

8. System as claimed in any one of the preceding claims, wherein the runs of loss cable (11-14) extend through tunnels (6) and wherein the feeder means are positioned outside the tunnels.

## Patentansprüche

1. Anlage zur Funkkommunikation, umfassend Abschnitte von verlustbehafteten Leitungen (11-14), die aufeinander folgend entlang eines Funkabdeckungsbereichs angeordnet sind, und Mittel (15, 16, 21-26, 31-36) zur Versorgung der Leitungsabschnitte von Basisstationen (5-6) von wenigstens einem Mobilfunk-Kommunikationsnetz aus, wobei die Mittel zur Versorgung Mittel (15, 25, 32) umfassen, um erste, von einer ersten Basisstation (5) eines Mobilnetzes stammende Funkfrequenzsignale (S_{D}) einem ersten Leitungsabschnitt (12) zu liefern, und Mittel (16, 26, 33) umfasst, um zweite, von einer zweiten Basistation (6) des Mobilnetzes stammende Funkfrequenzsignale (S'_{D}) einem zweiten, dem ersten Abschnitt benachbarten Leitungsabschnitt (13) zu liefern, **dadurch gekennzeichnet, dass** die Mittel zur Versorgung weiter Mittel (36, 46, 47) umfassen, um wenigstens einen Teil der zweiten Funkfrequenzsignale dem ersten Leitungsabschnitt (12) zu liefern.

2. Anlage nach Anspruch 1,
wobei der Teil der zweiten Funkfrequenzsignale dem ersten Leitungsabschnitt (12) mit einer Dämpfung in Bezug auf die ersten Funkfrequenzsignale geliefert wird, wie sie dem ersten Leitungsabschnitt geliefert werden.

3. Anlage nach Anspruch 1 oder 2,
wobei die Mittel zur Versorgung weiter Mittel (35) umfassen, um wenigstens einen Teil der ersten Funkfrequenzsignale (S_{D}) dem zweiten Leitungsabschnitt (13) zu liefern, mit einer Dämpfung in Bezug auf die zweiten Funkfrequenzsignale (S'_{D}), wie sie dem zweiten Leitungsabschnitt geliefert werden.

4. Anlage nach einem der Ansprüche 1 bis 3,
wobei die zweiten Funkfrequenzsignale (S'_{D}) alle dem ersten Leitungsabschnitt (12) geliefert werden.

5. Anlage nach einem der Ansprüche 1 bis 3,
wobei der dem ersten Leitungsabschnitt (12) gelieferte Teil der zweiten Funkfrequenzsignale (S'_{D}), beschränkt ist auf eine Trägerfrequenz für ein Bakensignal der zweiten Basisstation (6).

6. Anlage nach einem der vorhergehenden Ansprüche,
wobei die Mittel zur Versorgung (15, 25, 31, 32) dazu eingerichtet sind, die von der wenigstens einen von der ersten und zweiten Basisstation (5) stammenden Funkfrequenzsignale (S_{D}) mehreren benachbarten Leitungsabschnitten (11, 12) zu liefern.

7. Anlage nach einem der vorhergehenden Ansprüche,
umfassend Mittel zum Sammeln von von den Abschnitten verlustbehafteter Leitungen (11-14) eingefangenen Funksignalen, wobei die Mittel zum Sammeln Mittel (41, 43) umfassen, um dritte, von dem ersten Leitungsabschnitt (12) stammende Funkfrequenzsignale (S_{U}) der ersten Basisstation (5) zu liefern, und Mittel (48, 49) umfassen, um wenigstens einen Teil der dritten Funkfrequenzsignale (S_{U}) der zweiten Basisstation (6) zu liefern.

8. Anlage nach einem der vorhergehenden Ansprüche,
wobei die Abschnitte verlustbehafteter Leitungen (11-14) sich in Tunneln (6) erstrecken, und die Mittel zur Versorgung außerhalb der Tunnel angeordnet sind.
